# EUROPÄISCHE PATENTSCHRIFT

(11) **EP 3 458 402 B1**
(45) Veröffentlichungstag und Bekanntmachung des Hinweises auf die Patenterteilung: **10.06.2020**
(21) Anmeldenummer: 17725207.9
(22) Anmeldetag: 16.05.2017
(51) Int. Cl.: B66C 13/28

(54) **HUBWERK UND VERFAHREN ZUM BETREIBEN EINES HUBWERKS**
LIFTING DEVICE AND METHOD FOR OPERATING A LIFTING DEVICE
MÉCANISME DE LEVAGE ET PROCÉDÉ PERMETTANT DE FAIRE FONCTIONNER UN MÉCANISME DE LEVAGE

(30) Priorität: 20.05.2016 DE 102016109295
(43) Veröffentlichungstag der Anmeldung: 27.03.2019
(73) Patentinhaber: Konecranes Global Corporation, 05830 Hyvinkää (FI)
(72) Erfinder: KRAUSE, Gabriel, 59394 Nordkirchen (DE); KLEINWÄCHTER, Daniel, 59425 Unna (DE); PAMOTAT, Ralf, 58313 Hardecke (DE); REETZ, Torsten, 58135 Hagen (DE)
(74) Vertreter: Moser Götze & Partner Patentanwälte mbB
(86) Internationale Anmeldenummer: PCT/EP2017/061737
(87) Internationale Veröffentlichungsnummer: WO 2017/198669

(56) Entgegenhaltungen:
- WO-A1-2015/082766
- WO-A2-2012/084508
- DE-A1- 19 645 811
- DE-A1-102006 043 492

## Beschreibung

Die Erfindung betrifft ein Hubwerk zum Heben und Senken einer Last, mit einem Motor, der als Drehstromasynchronmotor ausgebildet ist und über den das Hubwerk zum Heben und Senken der Last antreibbar ist, und mit einem Bremswiderstand, über den eine Leistung, die aus einem beim Senken der Last mit einer Senkgeschwindigkeit erfolgenden generatorischen Betrieb des Motors resultiert, in Wärme umwandelbar ist.

Auch betrifft die Erfindung ein Verfahren zum Betreiben eines entsprechenden Hubwerks.

Dokument WO 2012/084508 offenbart eine Hebevorrichtung mit den Merkmalen des Oberbegriffs von Anspruch 1. Aus der DE 10 2006 043 492 A1 ist ein Hebezeug bekannt, dessen Hubwerk lastabhängig auf verschiedene Hubgeschwindigkeiten einstellbar ist, so dass mit verringerter Hubgeschwindigkeit eine größere Last gehoben werden kann. Ein ähnliches Hubwerk ist auch in der DE 196 45 811 A1 beschrieben.

Aus der DE 37 39 339 A1 ist eine Krananlage bekannt, deren Hubwerke mittels Schleifringläufermotoren angetrieben werden und eine lastabhängige Senkgeschwindigkeitsregelung umfassen.

In der DE 601 31 231 T2 ist ein Kran mit einem Hubwerk beschrieben, dessen Motor lastabhängig gebremst werden kann.

Auch sind Hubwerke mit gegenüber der vorliegenden Erfindung andersartigen Antriebstechnologien bekannt. So ist beispielsweise in der DE 18 15 421 A ein Hubwerk beschrieben, das mit einem als Compoundmotor ausgebildeten Gleichstrommotor und einem Bremswiderstand im Ankerstromkreis des Compoundmotors betrieben wird.

Weitere Verwendungen von Bremswiderständen sind aus der DE 10 2010 020 123 B4 und der DE 42 00 984 A1 bekannt.

Der Erfindung liegt die Aufgabe zugrunde, ein verbessertes Hubwerk sowie ein verbessertes Verfahren zum Betreiben eines Hubwerks bereit zu stellen.

Diese Aufgabe wird durch ein Hubwerk mit den Merkmalen des Anspruchs 1 und durch ein Verfahren mit den Merkmalen des Anspruchs 6 gelöst. In den abhängigen Ansprüchen sind vorteilhafte Ausgestaltungen der Erfindung angegeben.

Um ein Hubwerk zum Heben und Senken einer Last, mit einem Motor, der als Drehstromasynchronmotor ausgebildet ist und über den das Hubwerk zum Heben und Senken der Last antreibbar ist, und mit einem Bremswiderstand, über den eine Leistung, die aus einem beim Senken der Last mit einer Senkgeschwindigkeit erfolgenden generatorischen Betrieb des Motors resultiert, in Wärme umwandelbar ist, zu verbessern, wird vorgeschlagen, dass der Bremswiderstand für eine Nennleistung ausgelegt ist, die kleiner als die bei Nennlast und Nennsenkgeschwindigkeit resultierende Leistung ist. Gegenüber einem Bremswiderstand, der für einen Betrieb des Hubwerks mit Nennlast und Nennsenkgeschwindigkeit und damit im Vergleich entsprechend größer ausgelegt ist, bewirkt die erfindungsgemäß kleinere Dimensionierung des Bremswiderstands einen vorteilhaft verringerten Platzbedarf. Auch die Herstellkosten und das Gewicht des Bremswiderstands sowie des Hubwerks lassen sich auf diese Weise verringern.

In konstruktiv einfacher Weise ist vorgesehen, dass der Motor über eine Steuerung ansteuerbar ist und in der Steuerung unter Berücksichtigung mindestens eines Belastbarkeitskennwerts des Bremswiderstands für die Senkgeschwindigkeit ein Grenzwert so einstellbar ist, dass beim Senken der Last mit der Senkgeschwindigkeit, die dem Grenzwert entspricht, die resultierende Leistung auf den mindestens einen Belastbarkeitskennwert begrenzt ist. Somit kann auf einfache Weise die Senkgeschwindigkeit auf die Dimensionierung des Bremswiderstands elektronisch beziehungsweise digital in der Steuerung eingestellt werden. Dadurch ist ein insgesamt besonders wirtschaftlicher Betrieb des erfindungsgemäßen Hubwerks möglich, insbesondere wenn Lastfälle mit Nennlast selten auftreten und hierbei zur Vermeidung einer Überlastung des Bremswiderstands eine gegenüber der Nennsenkgeschwindigkeit verringerte Senkgeschwindigkeit in Kauf genommen werden kann. In einer Vielzahl der auftretenden Lastfälle ist vielmehr die entsprechend kleinere Dimensionierung des Bremswiderstands selbst für ein Senken mit Nennsenkgeschwindigkeit ausreichend oder es muss nur eine geringe Begrenzung der Senkgeschwindigkeit über eine Einstellung des Grenzwerts erfolgen, um den oder die Belastbarkeitskennwerte des Bremswiderstands nicht zu überschreiten.

Des Weiteren ist in vorteilhafter Weise vorgesehen, dass der Grenzwert unter Berücksichtigung der Lastmasse der von dem Hubwerk aufgenommenen Last und/oder des Hubwegs der von dem Hubwerk aufgenommenen Last oder der resultierenden Leistung einstellbar ist.

Durch die zusätzliche Berücksichtigung der Lastmasse ist es möglich, den mindestens einen Belastbarkeitskennwert des Bremswiderstands für einen Arbeitsbereich mit anwendungsspezifisch häufig auftretenden Lastfällen beziehungsweise Lastmassen auszulegen. Dies kann so erfolgen, dass beispielsweise alle Lasten, deren Lastmasse 50% der Nennlast oder weniger entspricht, mit Nenngeschwindigkeit gesenkt werden können, ohne hierbei den Bremswiderstand durch Überschreiten seines mindestens einen Belastbarkeitskennwerts zu überlasten. Für alle Lasten mit mehr als 50% der Nennlast muss der Grenzwert für die Senkgeschwindigkeit verringert werden. Die Verringerung des Grenzwerts auf einen von der aktuellen Lastmasse abhängigen Wert kann wie unten beispielsweise in Bezug auf die zweite Ausführungsform beschrieben von vornherein oder ausgehend von der Nennsenkgeschwindigkeit kontinuierlich erfolgen.

Auch durch die zusätzliche Berücksichtigung des Hubwegs ist es möglich, den mindestens einen Belastbarkeitskennwert des Bremswiderstand für einen Arbeitsbereich mit anwendungsspezifisch häufig auftretenden Lastfällen beziehungsweise Hubwegen auszulegen. Hierbei können die Kurzeinschaltdauer und die zugehörige Spitzenleistung des Bremswiderstands so dimensioniert werden, dass alle Senkvorgänge bis zu einem vorgegebenen Hubweg, beispielsweise 10% des Nennhubwegs, mit Nennsenkgeschwindigkeit innerhalb der Kurzeinschaltdauer höchstens mit der zugehörigen Spitzenleistung und somit überlastungsfrei erfolgen können. Dies gilt auch bei Nennlast, da der Wert der Spitzenleistung entsprechend dimensioniert ist. Bei größerem ermittelten Hubweg und damit selbst bei Nennsenkgeschwindigkeit länger als die Kurzeinschaltdauer andauerndem Senkvorgang muss der Grenzwert für die Senkgeschwindigkeit verringert werden. Die Verringerung des Grenzwerts auf einen von dem aktuellen Hubweg abhängigen Wert kann wie unten beispielsweise in Bezug auf die dritte Ausführungsform beschrieben von vornherein oder ausgehend von der Nennsenkgeschwindigkeit kontinuierlich erfolgen.

Wenn sowohl die Lastmasse als auch der Hubweg berücksichtigt werden, ergibt sich die in Bezug auf die vierte Ausführungsform näher beschriebene Verbesserung, dass der Grenzwert in einigen Fällen länger der Nennsenkgeschwindigkeit entsprechen kann, als dies bei alleiniger Berücksichtigung der Lastmasse oder des Hubwegs möglich wäre.

Wenn zur Einstellung des Grenzwerts für die Senkgeschwindigkeit die resultierende Leistung im Sinne eines Istwerts berücksichtigt wird, erfolgt ein kontinuierlicher Vergleich des Istwerts mit dem Belastbarkeitskennwert im Sinne eines Sollwerts, um ein Überschreiten des Belastbarkeitskennwerts durch einen entsprechend gewählten Grenzwert zu verhindern. Wenn die resultierende Leistung über einen Leistungssensor im Bereich eines Umrichters, Zwischenkreises oder des Bremswiderstands erfasst wird, muss keine Lastmasse und kein Hubweg ermittelt werden. Die resultierende Leistung kann jedoch auch indirekt über eine kontinuierlich ermittelte Lastmasse und/oder Senkgeschwindigkeit von entsprechenden Lastbeziehungsweise Geschwindigkeitssensoren ermittelt werden, die dann Teil des Leistungssensors sind.

Es kann ebenso vorteilhaft vorgesehen sein, dass der Grenzwert für die Senkgeschwindigkeit über die Steuerung so einstellbar und insbesondere maximierbar ist, dass der Bremswiderstand höchstens im Rahmen des mindestens einen Belastbarkeitskennwerts betrieben werden kann. Hierbei wird der Grenzwert für die Senkgeschwindigkeit gegenüber der Sennsenkgeschwindigkeit nicht weiter als für einen überlastungsfreien Betrieb des Bremswiderstands erforderlich reduziert. Dadurch kann die tatsächliche Senkgeschwindigkeit in wirtschaftlich vorteilhafter Weise bis zum Erreichen des oder der Belastbarkeitskennwerte maximiert werden, ohne hierbei durch Überschreiten des entsprechenden Belastbarkeitskennwerts erhöhten Verschleiß zu verursachen. Dies ermöglicht auch bei einem wie vorliegend beschrieben kleiner dimensionierten Bremswiderstand eine höhere Lebensdauer des Hubwerks.

In konstruktiv einfacher Weise ist vorgesehen, dass ein Lastsensor vorgesehen ist, um einen Wert der Lastmasse zu ermitteln und der Steuerung zur Verfügung zu stellen und/oder ein Hubwegsensor vorgesehen ist, um einen Wert des Hubwegs zu ermitteln und der Steuerung zur Verfügung zu stellen oder ein Leistungssensor vorgesehen ist, um einen Wert der resultierenden Leistung zu ermitteln und der Steuerung zur Verfügung zu stellen. Dadurch kann die Anpassung des Grenzwerts für die Senkgeschwindigkeit unter Berücksichtigung der aktuell aufgenommenen Last, des Hubwegs beziehungsweise der resultierenden Leistung besonders einfach erfolgen. Der Lastsensor kann auch eine Motorstrommessung im Umrichter des Hubwerks und eine Schlupfmessung durch einen Drehgeber am Motor umfassen, deren Auswertung zur Ermittlung der Lastmasse in der elektronischen Steuerung erfolgt. Der Leistungssensor kann den Lastsensor und auch einen Geschwindigkeitssensor zur Ermittlung der Senkgeschwindigkeit umfassen.

Um ein Verfahren zum Betreiben eines Hubwerks zum Heben und Senken einer Last, mit einem Motor, der als Drehstromasynchronmotor ausgebildet ist und über den das Hubwerk zum Heben und Senken der Last antreibbar ist, und mit einem Bremswiderstand, über den eine Leistung, die aus einem beim Senken der Last mit einer Senkgeschwindigkeit erfolgenden generatorischen Betrieb des Motors resultiert, in Wärme umwandelbar ist, zu verbessern, wird vorgeschlagen, dass beim Senken der Last unter Berücksichtigung mindestens eines Belastbarkeitskennwerts des Bremswiderstands für die Senkgeschwindigkeit ein Grenzwert so eingestellt wird, dass beim Senken der Last mit der Senkgeschwindigkeit, die dem Grenzwert entspricht, die resultierende Leistung auf den mindestens einen Belastbarkeitskennwert begrenzt ist. Durch eine entsprechende Einstellung eines Grenzwerts für die Senkgeschwindigkeit, die vorzugsweise elektronisch beziehungsweise digital in der Steuerung des Hubwerks erfolgt, ist es in vorteilhafter Weise möglich, den Bremswiderstand kleiner als bisher üblich zu dimensionieren und dadurch Platz, Gewicht und Kosten zu sparen. Dadurch wird aus den oben in Bezug auf das erfindungsgemäße Hubwerk genannten Gründen ein noch wirtschaftlicherer Betrieb des Hubwerks möglich. Indem ein Grenzwert für die Senkgeschwindigkeit anders als im oben genannten Stand der Technik unter Berücksichtigung mindestens eines Belastbarkeitskennwerts, für den der installierte Bremswiderstand ausgelegt ist, eingestellt wird, kann das Hubwerk besonders sicher betrieben werden und Überlastungen sowie Zerstörungen des Bremswiderstands vermieden werden. Das Verfahren kann zudem besonders einfach durch eine geeignete Software-Routine in der Steuerung des Hubwerks implementiert werden.

In konstruktiv einfacher Weise ist zudem vorgesehen, dass der Bremswiderstand für eine Nennleistung ausgelegt ist, die kleiner als die bei Nennlast und Nennsenkgeschwindigkeit resultierende Leistung ist. Die oben genannten Vorteile gelten hier entsprechend.

In konstruktiv einfacher Weise ist außerdem vorgesehen, dass der Grenzwert in einer Steuerung des Hubwerks, über die der Motor ansteuerbar ist, unter Berücksichtigung der Lastmasse der von dem Hubwerk aufgenommenen Last und/oder des Hubwegs der von dem Hubwerk aufgenommenen Last oder der resultierenden Leistung eingestellt wird.

In vorteilhafter Weise ist ferner vorgesehen, dass der Grenzwert für die Senkgeschwindigkeit so eingestellt und insbesondere maximiert wird, dass der Bremswiderstand höchstens im Rahmen des mindestens einen Belastbarkeitskennwerts betrieben werden kann. Dadurch kann die tatsächliche Senkgeschwindigkeit in wirtschaftlich vorteilhafter Weise bis zum Erreichen des oder der Belastbarkeitskennwerte maximiert werden, ohne hierbei durch Überschreiten des entsprechenden Belastbarkeitskennwerts erhöhten Verschleiß zu verursachen. Dies ermöglicht auch bei einem wie vorliegend beschrieben kleiner dimensionierten Bremswiderstand einen verschleißarmen Betrieb mit höherer Lebensdauer des Hubwerks.

In konstruktiv einfacher Weise kann außerdem ein Wert der Lastmasse über einen Lastsensor ermittelt und der Steuerung zur Verfügung gestellt werden und/oder ein Wert des Hubwegs über einen Hubwegsensor ermittelt und der Steuerung zur Verfügung gestellt werden oder ein Wert der resultierenden Leistung über einen Leistungssensor ermittelt und der Steuerung zur Verfügung gestellt werden.

Ein Ausführungsbeispiel der Erfindung wird anhand der nachfolgenden Beschreibung näher erläutert. Es zeigen:
Figur 1 einen schematisch dargestellten Seilzug und
Figur 2 ein Diagramm mit Belastbarkeitskennwerten eines Bremswiderstands.

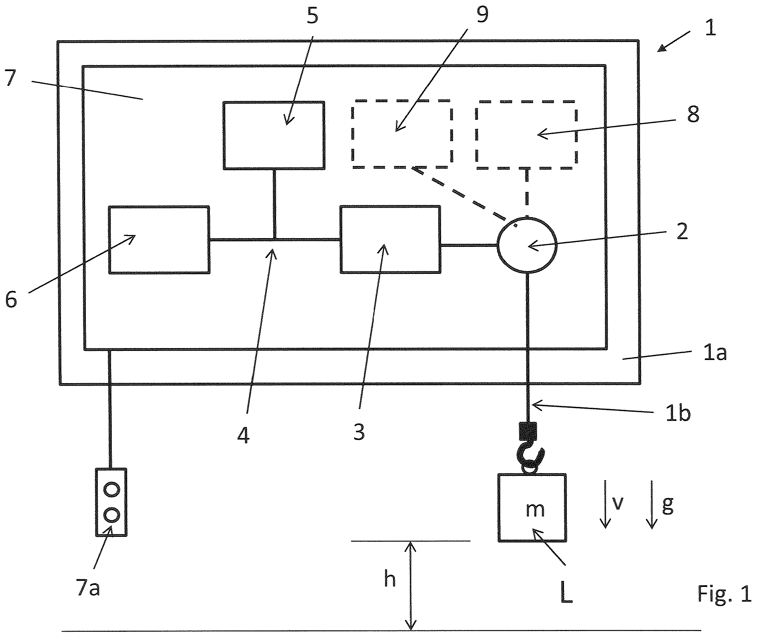

In der Figur 1 ist ein schematisch dargestellter Seilzug 1 zum Heben und Senken einer Last L abgebildet. Der Seilzug 1 umfasst ein Hubwerk 1a mit einem als Elektromotor und insbesondere als Drehstromasynchronmotor ausgebildeten Motor 2, über den ein als Seil 1b ausgebildetes Lastaufnahmemittel des Hubwerks 1a zum Heben beziehungsweise Senken der aufgenommenen Last L angetrieben und hierbei angehoben beziehungsweise abgesenkt wird. Hierbei treibt der Motor 2 über ein Getriebe eine Seiltrommel (nicht dargestellt) an, auf der das Seil 1b zum Heben der Last L aufgewickelt und von der das Seil 1b zum Senken der Last L abgewickelt wird. An einem herabhängenden Ende des Seils 1b ist die vom Hubwerk 1a aufgenommene Last L beispielsweise über einen Lasthaken befestigt.

Über einen Steuerschalter 7a können von einem Bediener Steuerbefehle zum Heben und Senken der Last L ausgelöst werden, die über eine mit dem Steuerschalter 7a wirkverbundene Steuerung 7 des Seilzugs 1 ausgeführt werden. Das Hubwerk 1a umfasst einen vorzugsweise als Frequenzumrichter ausgebildeten Umrichter 3, über den der Motor 2 mittels der Steuerung 7 beziehungsweise des Steuerschalters 7a angesteuert werden kann. Der Motor 2 ist dementsprechend als so genannter umrichtergesteuerter beziehungsweise frequenzumrichtergesteuerter Elektromotor, insbesondere als Drehstromasynchronmotor, ausgebildet. Über einen als Gleichspannungszwischenkreis ausgebildeten Zwischenkreis 4 ist der Umrichter 3 an eine Energiequelle 5 angeschlossen, über die elektrische Energie zum Betrieb des Hubwerks 1a und insbesondere des Motors 2 in den Zwischenkreis 4 eingespeist wird.

Wenn die Last L durch einen entsprechenden Steuerbefehl abgesenkt wird, arbeitet der Motor 2 als Generator und speist im so genannten generatorischen Betrieb elektrische Energie zurück in Kondensatoren (nicht dargestellt) des Zwischenkreises 4. Bei einem generatorischen Betrieb des Motors 2 steigt folglich die Spannung im Zwischenkreis 4. Um das Auslösen von Sicherungen oder den Ausfall von elektronischen Komponenten des Hubwerks 1a zu verhindern, muss ein zu hohes Ansteigen der Spannung im Zwischenkreis 4 verhindert werden. Hierfür ist ein Bremswiderstand 6 an den Zwischenkreis 4 angeschlossen. Der Bremswiderstand 6 wird dementsprechend als Zwischenkreiswiderstand betrieben. Bei Überschreiten eines bestimmten Spannungswertes im Zwischenkreis 4 wird ein die Spannung im Zwischenkreis 4 überwachender Bremschopper aktiviert, wodurch überschüssige Energie in Form von Strom zu dem Bremswiderstand 6 geleitet wird. Durch den Bremswiderstand 6 wird dann die überschüssige Energie beziehungsweise elektrische Leistung in Wärme beziehungsweise Wärmeleistung umgewandelt und somit dem Zwischenkreis 4 entzogen. Entsprechende Bremschopper können Teil des Umrichters 3 sein.

Für die Auslegung beziehungsweise Dimensionierung des Bremswiderstands 6 ist die von dem Bremswiderstand 6 aufzubringende beziehungsweise aufzunehmende elektrische Leistung P zu berücksichtigen, die aus einem beim Senken der Last L erfolgenden generatorischen Betrieb des Motors 2 resultiert. Diese resultierende Leistung P ergibt sich aus den nachfolgend dargelegten Zusammenhängen und physikalischen Eigenschaften des Hubwerks 1a.

Hierbei gilt für die resultierende Leistung P = E / ts, wobei E die Energie ist, die ausgehend vom Stillstand einer zuvor über einen Hubweg h angehobenen Last L beim Senken der Last L über den Hubweg h maximal umzuwandeln ist, und wobei ts die hierfür benötigte Senkzeit ist. E entspricht hierbei dem Produkt aus der Lastmasse m der Last L, der Erdbeschleunigung g, dem Hubweg h der Last L und dem Wirkungsgrad η des Hubwerks 1a, so dass gilt: E = m ^{∗} g ^{∗} h ^{∗} η. Die Senkzeit ts ergibt sich wiederum aus dem Quotienten h / v, wobei h der Hubweg der Last L und v die Senkgeschwindigkeit der Last L ist, mit der die Last L beim Senken den Hubweg h zurücklegt. Es wird somit für die Auslegung des Bremswiderstands 6 vereinfachend von einer beschleunigungsfreien und damit konstanten Senkgeschwindigkeit v der Last L über den Hubweg h ausgegangen.

Damit ergibt sich für die vom Bremswiderstand 6 aufzubringende Leistung P allgemein:
P = m ^{∗} g ^{∗} v ^{∗} η. Da g und η als Konstanten angesehen werden können, ist die Leistung P also nur von der Lastmasse m und von der Senkgeschwindigkeit v abhängig.

Die maximal mögliche resultierende Leistung Pmax ergibt sich bei dem Hubwerk 1a folglich, wenn bei Nennlast mit Nennsenkgeschwindigkeit abgesenkt wird. Hierbei wird unter Nennlast eine Last L mit entsprechend der Tragfähigkeit des Hubwerks 1a maximal zulässiger Lastmasse m beziehungsweise entsprechendem Lastgewicht und unter Nennsenkgeschwindigkeit die für das Hubwerk 1a maximal zulässige Senkgeschwindigkeit v für eine Last L verstanden.

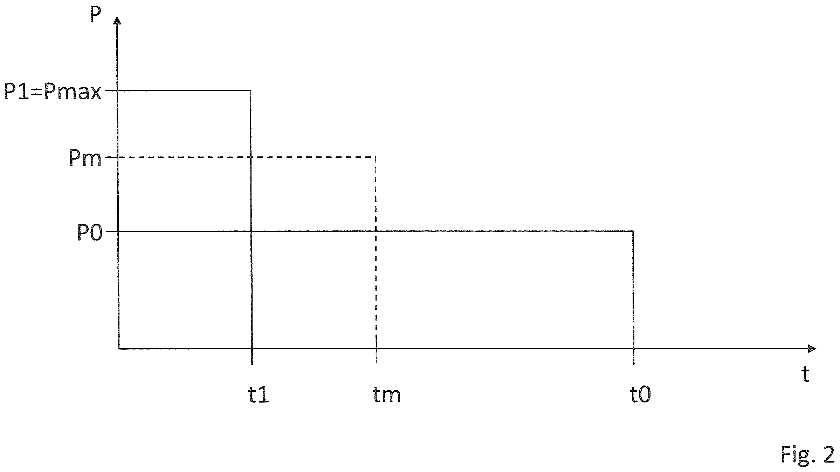

In der Figur 2 ist ein Diagramm mit Belastbarkeitskennwerten, das heißt einschaltdauerabhängigen Leistungswerten, des Bremswiderstands 6 dargestellt. Bei dem erfindungsgemäßen Hubwerk 1a ist der Bremswiderstand 6 für eine Nennleistung PO ausgelegt, die kleiner als die gemäß obiger Formel bei Nennlast und Nennsenkgeschwindigkeit resultierende Leistung Pmax ist. Die Nennleistung PO kann von dem Bremswiderstand 6 während eines nachfolgend als Referenzeinschaltdauer t0 bezeichneten Zeitintervalls überlastungsfrei aufgebracht beziehungsweise aufgenommen werden. Auch kann der Bremswiderstand 6 eine im Vergleich zur Nennleistung PO größere Spitzenleistung P1, die mindestens Pmax entspricht, überlastungsfrei aufbringen beziehungsweise aufnehmen, jedoch nur für ein im Vergleich zur Referenzeinschaltdauer t0 kürzeres Zeitintervall, das nachfolgend als Kurzeinschaltdauer t1 bezeichnet wird. Wird der Bremswiderstand 6 mit der Spitzenleistung P1 auch über die zugehörige Kurzeinschaltdauer t1 hinaus beaufschlagt, liegt eine zu vermeidende Überlastung des Bremswiderstands 6 vor. Der Bremswiderstand 6 kann wie in Figur 2 gestrichelt dargestellt auch mit mindestens einer gegenüber der Nennleistung PO größeren aber gegenüber der Spitzenleistung P1 kleineren Spitzenleistung Pm für eine Kurzeinschaltdauer tm länger als t1 aber kürzer als t0 überlastungsfrei betrieben werden. Hierbei gilt allgemein, dass eine kürzere Einschaltdauer eine größere Spitzenleistung überlastungsfrei ermöglicht als eine längere Einschaltdauer. Die Nennleistung PO und ihre als Bezugsgröße zugehörige Referenzeinschaltdauer t0 stellen gemeinsam ebenso einen Belastbarkeitskennwert des Bremswiderstands 6 dar wie die Spitzenleistung P1 bzw. Pm und ihre als Bezugsgröße zugehörige Kurzeinschaltdauer t1 bzw. tm.

Mit der zuvor beschriebenen Auslegung des Bremswiderstands 6 einhergehend muss durch ein geeignetes Verfahren zum Betrieb des Hubwerks 1a sichergestellt werden, dass die im generatorischen Betrieb des Motors 2 resultierende Leistung P auf den oder die Belastbarkeitskennwerte P0/t0 und/oder P1/t1 und/oder Pm/tm begrenzt ist, um keinen dieser Belastbarkeitskennwert zu übersteigen und eine Überlastung des Bremswiderstands 6 zu vermeiden. Andernfalls drohen bei einer entsprechenden Überlastung ein zu starkes Erhitzen und eine Zerstörung des Bremswiderstands 6 sowie weiterer Komponenten des Hubwerks 1a. Für das Hubwerk 1a und das Verfahren zu dessen Betrieb sind die nachfolgend beschriebenen Ausführungsformen möglich.

Gemäß einer ersten Ausführungsform wird von und in der Steuerung 7 in Abhängigkeit beziehungsweise unter Berücksichtigung mindestens eines Belastbarkeitskennwerts des Bremswiderstands 6 ein Grenzwert vmax für die Senkgeschwindigkeit v im Sinne eines maximal möglichen Sollwertes eingestellt. Die Einstellung des Grenzwerts vmax bewirkt, dass bei der Ausführung eines entsprechenden Steuerbefehls zum Senken der Last L über die Steuerung 7 und den Umrichter 3 die vorzugsweise stufenlos einstellbare tatsächliche Senkgeschwindigkeit v im Sinne eines Istwertes auf den Grenzwert vmax begrenzt wird. Es wird zudem davon ausgegangen, dass die Masse m der Last L höchstens der Nennlast entspricht, da bei einer größeren Masse m das Hubwerk 1a von einer nicht dargestellten Überlastsicherung stillgelegt wird.

Gemäß einer ersten Alternative der ersten Ausführungsform ist zumindest die Nennleistung PO mit der zugehörigen Referenzeinschaltdauer t0 als Belastbarkeitskennwert des installierten Bremswiderstands 6 in der Steuerung 7 gespeichert und steht dieser somit für die Einstellung des Grenzwerts vmax als vorgegebene Rechengröße zur Verfügung. Anhand dessen wird der Grenzwert vmax unter Berücksichtigung des gespeicherten Belastbarkeitskennwerts P0/t0 so weit unterhalb der Nennsenkgeschwindigkeit eingestellt, dass der Bremswiderstand 6 zur Vermeidung seiner Überlastung selbst dann höchstens mit seiner Nennleistung PO betrieben wird, wenn bei Nennlast über den Nennhubweg, also den maximal möglichen Hubweg h, abgesenkt wird. Gemäß der ersten Alternative der ersten Ausführungsform liegt der für die Senkgeschwindigkeit v eingestellte Grenzwert vmax konstant unterhalb der Nennsenkgeschwindigkeit. Dies gilt für alle Senkvorgänge unabhängig davon, welchen Wert die Lastmasse m und der Hubweg h tatsächlich aufweisen.

In einer zweiten Alternative der ersten Ausführungsform ist zusätzlich mindestens eine Spitzenleistung P1 mit der zugehörigen Kurzeinschaltdauer t1 als weiterer Belastbarkeitskennwert in der Steuerung 7 gespeichert und dieser für die Einstellung des Grenzwerts vmax als vorgegebene Rechengröße zur Verfügung gestellt. P1 entspricht bei dem in Figur 2 dargestellten Beispiel Pmax, kann jedoch auch größer dimensioniert sein. Damit kann der Grenzwert vmax unter Berücksichtigung der gespeicherten Belastbarkeitskennwerte P0/t0 und P1/t1 so eingestellt werden, dass zunächst mit Nennsenkgeschwindigkeit gesenkt werden kann, ohne den Bremswiderstand 6 zu überlasten. Der Grenzwert vmax entspricht somit zunächst der Nennsenkgeschwindigkeit. Ein Betrieb des Bremswiderstands 6 oberhalb von P0, insbesondere mit P1=Pmax, ist hierbei möglich, jedoch höchstens für die Kurzeinschaltdauer t1. Zur Vermeidung einer Überlastung des Bremswiderstands 6 wird noch vor Ablauf der Kurzeinschaltdauer t1 über die Steuerung 7 der Grenzwert vmax für die Senkgeschwindigkeit v derart verringert, dass der Bremswiderstand 6 mit Ablauf der Kurzeinschaltdauer t1 selbst dann höchstens noch mit seiner Nennleistung PO betrieben werden kann, wenn mit Nennlast weiter abgesenkt wird, beispielsweise über den Nennhubweg. Die Verringerung der Senkgeschwindigkeit v und der resultierenden Leistung P erfolgt hierbei vorzugsweise kontinuierlich und ebenfalls unabhängig von den aktuellen Werten der Lastmasse m und des Hubwegs h. Ausgehend von der Nennsenkgeschwindigkeit wird der Grenzwert vmax hierfür entsprechend verringert, so dass er mit Ablauf von t1 dem konstanten Grenzwert der ersten Alternative entspricht. Auf diese Weise ist mittels der zweiten Alternative ein insgesamt schnelleres und somit wirtschaftlicheres aber zugleich überlastungsfreies Senken möglich als mittels der ersten Alternative. Es können für die Berechnung und Einstellung des Grenzwerts vmax in gleicher Weise auch einer oder mehrere weitere Belastbarkeitskennwerte Pm/tm des Bremswiderstands 6 mit gegenüber der Nennleistung PO größerer Spitzenleistung Pm und gegenüber der Referenzeinschaltdauer t0 kürzerer Kurzeinschaltdauer tm berücksichtigt werden, so dass der Bremswiderstand 6 entsprechend länger als die Kurzeinschaltdauer t1 oberhalb von PO mit entsprechend höherer Senkgeschwindigkeit v betrieben werden kann.

Bei der ersten Ausführungsform können jedoch Fälle auftreten, in denen die Masse m der Last L so gering ist, dass als resultierende Leistung P selbst mit Nennsenkgeschwindigkeit höchstens die Nennleistung PO des Bremswiderstands 6 erreicht werden kann. Auch kann der Hubweg h so gering sein, dass ein Senkvorgang über den Hubweg h mit Nennsenkgeschwindigkeit spätestens mit Ablauf der für P1=Pmax geltenden Kurzeinschaltdauer t1 abgeschlossen ist. In diesem Fall droht auch bei Nennlast keine Überlastung, weil Pmax vom Bremswiderstand 6 höchstens für die Kurzeinschaltdauer t1 aufgenommen werden muss. In diesen Fällen wäre also eine Verringerung des Grenzwerts unter den Wert der Nennsenkgeschwindigkeit nicht erforderlich, da keine Überlastung des Bremswiderstands 6 droht.

Im Hinblick auf derartige Fälle ermöglichen die nachfolgend beschriebenen Ausführungsformen einen noch wirtschaftlicheren Betrieb des Hubwerks 1a.

Gemäß einer zweiten Ausführungsform ist vorgesehen, dass die Steuerung 7 den Grenzwert vmax für die Senkgeschwindigkeit v im Unterschied zur ersten Ausführungsform nicht nur in Abhängigkeit beziehungsweise unter Berücksichtigung mindestens eines Belastbarkeitskennwerts P0/t0, P1/t1, Pm/tm, sondern zusätzlich in Abhängigkeit beziehungsweise unter Berücksichtigung der Lastmasse m der von dem Hubwerk 1a aufgenommenen und angehobenen Last L berechnet und einstellt. Hierfür muss die Masse m ermittelt und der Steuerung 7 zur Verfügung gestellt werden. Die Lastmasse m wird vorzugsweise kontinuierlich über einen optional vorgesehenen und dementsprechend in Figur 1 schematisch und gestrichelt dargestellten Lastsensor 8 erfasst, der beispielsweise mit dem Motor 2 verbunden sein kann, um dessen Motorstrom abzugreifen und hierüber die Lastmasse m zu ermitteln und der Steuerung 7 den ermittelten Wert zur Verfügung zu stellen. Darüber hinaus wird als Belastbarkeitskennwert analog zur ersten Ausführungsform gemäß einer ersten Alternative zumindest P0/t0 und gemäß einer zweiten Alternative zusätzlich P1/t1, beispielsweise mit P1=Pmax, und/oder weitere Pm/tm berücksichtigt.

Damit kann bei der zweiten Ausführungsform der für die Senkgeschwindigkeit v eingestellte Grenzwert vmax auch für den gesamten Senkvorgang der Nennsenkgeschwindigkeit des Hubwerks 1a entsprechen. Dies kann beispielsweise der Fall sein, wenn der Lasthaken allein oder mit leichteren Lasten L über den Nennhubweg abgesenkt werden soll und hierbei von der Steuerung 7 festgestellt wird, dass bei der entsprechend ermittelten Lastmasse m die Nennleistung PO des Bremswiderstands 6 auch mit Nennsenkgeschwindigkeit nicht überschritten werden kann. Ab einer bestimmten Lastmasse m beziehungsweise entsprechendem Lastgewicht droht jedoch beim Absenken der Last L mit einer bestimmten Senkgeschwindigkeit v eine Überlastung durch Überschreiten der Nennleistung PO des Bremswiderstands 6. Hierbei kann der Wert der bestimmten Lastmasse m vorgegeben sein, um die Nennleistung PO für einen Arbeitsbereich so auszulegen, dass bis zu der bestimmten Lastmasse m immer überlastungsfrei mit Nennsenkgeschwindigkeit gesenkt werden kann. Wenn die Lastmasse m schwerer als der vorgegebene Wert ist, wird der drohenden Überlastung des Bremswiderstands 6 von der Steuerung 7 entgegengewirkt, indem der Grenzwert vmax für die Senkgeschwindigkeit v auf einen Wert eingestellt beziehungsweise begrenzt wird, der so viel kleiner als die Nennsenkgeschwindigkeit ist, dass beim Senken im Bremswiderstand 6 höchstens dessen Nennleistung PO anfällt und umgewandelt werden muss. Dadurch kann das Hubwerk 1a nur noch mit entsprechend reduzierter Senkgeschwindigkeit v betrieben werden, so dass der installierte Bremswiderstand 6 gerade nicht überlastet wird. Die Verringerung des Grenzwerts vmax und damit einhergehend der Senkgeschwindigkeit v kann hierbei analog zur ersten Alternative der ersten Ausführungsform so erfolgen, dass die Senkgeschwindigkeit v von vornherein, also bereits zu Beginn des Senkvorgangs, auf einen der Nennleistung PO entsprechenden Wert begrenzt ist. Analog zur zweiten Alternative der ersten Ausführungsform kann das Senken jedoch auch mit Nennsenkgeschwindigkeit beginnen und unter entsprechender Berücksichtigung von t1 und gegebenenfalls weiterer Belastbarkeitskennwerte Pm/tm durch Verringerung des Grenzwerts vmax verlangsamt werden, um die resultierende Leistung P entsprechend der zur Verfügung stehenden Belastbarkeitskennwerte Pm/tm zu begrenzen.

In einer zur zweiten Ausführungsform alternativen dritten Ausführungsform des Hubwerks 1a kann die Steuerung 7 den Grenzwert vmax für die Senkgeschwindigkeit v im Unterschied zur ersten Ausführungsform nicht nur in Abhängigkeit beziehungsweise unter Berücksichtigung des mindestens einen Belastbarkeitskennwerts P0/t0, P1/t1, Pm/tm, sondern zusätzlich in Abhängigkeit beziehungsweise unter Berücksichtigung des Hubwegs h der von dem Hubwerk 1a aufgenommenen und angehobenen Last L berechnen und einstellen. Hierfür muss der Hubweg h beispielsweise über einen optional vorgesehenen und dementsprechend in Figur 1 schematisch und gestrichelt dargestellten Hubwegsensor 9 ermittelt und der Steuerung 7 ein entsprechender Wert zur Verfügung gestellt werden. Der Hubwegsensor 9 kann beispielsweise als Absolutwertgeber ausgebildet sein. Darüber hinaus werden als Belastbarkeitskennwerte zumindest P0/t0 und P1/t1, beispielsweise mit P1=Pmax, und/oder weitere Pm/tm berücksichtigt.

Anhand des ermittelten Hubwegs h wird von der Steuerung 7 anhand des Zusammenhangs ts=h/v zunächst berechnet, welche Senkzeit ts sich bei beschleunigungsfreier und konstanter Nennsenkgeschwindigkeit für ein Senken über den ermittelten Hubweg h ergeben würde. In Kenntnis des gespeicherten Belastbarkeitskennwerts P1/t1 vergleicht die Steuerung 7 die für den erfassten Hubweg h berechnete Senkzeit ts mit der Kurzeinschaltdauer t1. Wenn die berechnete Senkzeit ts höchstens einen genauso großen Wert aufweist wie die Kurzeinschaltdauer t1, begrenzt die Steuerung 7 die Senkgeschwindigkeit v nicht beziehungsweise stellt den Grenzwert vmax auf den Wert der Nennsenkgeschwindigkeit ein. Bei hinreichend kleinen Hubwegen h kann daher auch bei Nennlast mit Nennsenkgeschwindigkeit und somit ohne Beschränkung der maximal zulässigen Senkgeschwindigkeit v abgesenkt werden. Dieser Zusammenhang kann bei der Dimensionierung des Bremswiderstands 6 genutzt werden, insbesondere in Bezug auf die Kurzeinschaltdauer t1 und zugehörige Spitzenleistung P1, die mindestens installiert werden muss, um über einen gewünschten vorgegebenen Hubweg h auch mit Nennsenkgeschwindigkeit und Nennlast überlastungsfrei absenken zu können.

Wenn die Steuerung 7 jedoch feststellt, dass der Hubweg h für die vorgenannten Bedingungen zu groß ist und dementsprechend die berechnete Senkzeit ts die Kurzeinschaltdauer t1 für den ermittelten Hubweg h auch bei Nennsenkgeschwindigkeit überdauern würde, wird der Grenzwert vmax und damit die Senkgeschwindigkeit v wie oben anhand der ersten Ausführungsform beschrieben verringert. Demnach kann auch hier in einer ersten Alternative von vornherein oder in einer zweiten Alternative spätestens mit Ablauf der Kurzeinschaltdauer t1 die Senkgeschwindigkeit v so begrenzt werden, dass der nach Ablauf von t1 verbleibende Rest des Hubwegs h selbst bei Nennlast überlastungsfrei, also ohne Überschreiten eines oder mehrerer Belastbarkeitskennwerte, zurückgelegt werden kann.

Ebenfalls möglich ist eine vierte Ausführungsform des Hubwerks 1a, gemäß der zur Berechnung und Einstellung des Grenzwerts vmax sowohl die Lastmasse m als auch der Hubweg h und darüber hinaus als Belastbarkeitskennwerte zumindest P0/t0 und P1/t1, beispielsweise mit P1=Pmax, berücksichtigt werden. Damit kann der Grenzwert vmax beispielsweise bei festgestellter Nennlast im Vergleich zur zweiten

Ausführungsform länger auf Nennsenkgeschwindigkeit eingestellt bleiben, wenn die Steuerung 7 zusätzlich feststellt, dass der ermittelte Hubweg h mit Nennsenkgeschwindigkeit spätestens mit Ablauf von t1 zurückgelegt werden kann. Ebenso kann der Grenzwert vmax anders als bei der dritten Ausführungsform auf Nennsenkgeschwindigkeit eingestellt bleiben, wenn die Steuerung 7 zwar feststellt, dass der ermittelte Hubweg h auch mit Nennsenkgeschwindigkeit während der Kurzeinschaltdauer t1 nicht vollständig zurückgelegt werden kann, die ermittelte Lastmasse m jedoch so gering ist, dass auch bei Nennsenkgeschwindigkeit keine Überlastung droht, weil der entsprechende Belastbarkeitskennwert P0/t0 eingehalten wird.

Gemäß einer fünften Ausführungsform kann die Steuerung 7 auch die im Sinne eines Istwerts tatsächlich resultierende Leistung P für die Einstellung des Grenzwerts vmax ermitteln und so berücksichtigen, dass der Grenzwert vmax nur dann reduziert wird, wenn beispielsweise die Nennleistung PO erreicht ist oder wenn eine Spitzenleistung Pm für eine vorgegebene Zeitspanne vor Ablauf der zugehörigen Kurzeinschaltdauer tm vorliegt. Die Steuerung 7 vergleicht also den Istwert der resultierenden Leistung P mit dem als Sollwert dienenden mindestens einen Belastbarkeitskennwert, um erforderlichenfalls dessen Überschreiten durch Verringerung des Grenzwerts vmax zu verhindern. Die aktuell resultierende Leistung P kann über einen Leistungssensor (nicht dargestellt) kontinuierlich ermittelt und der Steuerung 7 zur Verfügung gestellt werden. Die resultierende Leistung P kann hierbei beispielsweise aus den kontinuierlich ermittelten Werten der Lastmasse m und/oder der Senkgeschwindigkeit v berechnet werden, wobei die Berechnung insbesondere auch in der Steuerung 7 selbst erfolgen kann. Der Lastsensor 8 beziehungsweise ein entsprechender Geschwindigkeitssensor können hierbei Teil des Leistungssensors sein. Alternativ ist es auch ohne die vorgenannten Sensoren möglich, die resultierende Leistung P im Bereich des Umrichters 3, Zwischenkreises 4 oder Bremswiderstands 6 über einen geeigneten Leistungssensor zu erfassen.

Bei allen Ausführungsformen wird also zugunsten der oben beschriebenen kleineren Dimensionierung des Bremswiderstands 6 zumindest teilweise eine Verringerung der Senkgeschwindigkeit v und damit einhergehend eine Erhöhung der Senkzeit ts in Kauf genommen. Damit ist sichergestellt, dass auch bei Nennlast ein Senken immer zu einer resultierenden Leistung P führt, die keinen Belastbarkeitskennwert des Bremswiderstands 6 übersteigt, sondern hierauf begrenzt ist. Allerdings wird außer bei der ersten Ausführungsform bei allen übrigen Ausführungsformen der Grenzwert vmax für die Senkgeschwindigkeit v gegenüber der Nennsenkgeschwindigkeit nur begrenzt, wenn sich aufgrund der ermittelten Lastmasse m und/oder des Hubwegs h oder der resultierenden Leistung P ergibt, dass das Überschreiten eines Belastbarkeitskennwerts des Bremswiderstands 6 droht.

Die Implementierung der erfindungsgemäßen Steuerungseinstellungen beziehungsweise Verfahrensschritte kann auf einfache Weise digital beziehungsweise elektronisch in Form einer geeigneten Software-Routine in der Steuerung 7 erfolgen.

Anstelle eines als Seilzug 1 ausgebildeten Hebezeugs ist auch ein als Kettenzug ausgebildetes Hebezeug denkbar, das ein entsprechendes Hubwerk 1a aufweist und dessen Lastaufnahmemittel nicht als Seil 1b, sondern als Kette ausgebildet ist.

Auch können derartige Hubwerke 1a als Bestandteil von Kranen eingesetzt werden, wobei sie über Krankatzen entlang eines Kranträgers horizontal verfahrbar sind.

### Bezugszeichenliste

- 1: Seilzug
- 1a: Hubwerk
- 1b: Seil
- 2: Motor
- 3: Umrichter
- 4: Zwischenkreis
- 5: Energiequelle
- 6: Bremswiderstand
- 7: Steuerung
- 7a: Steuerschalter
- 8: Lastsensor
- 9: Hubwegsensor

- g: Erdbeschleunigung
- h: Hubweg
- L: Last
- m: Lastmasse
- P: Leistung
- Pmax: maximal mögliche Leistung
- PO: Nennleistung
- P1: Spitzenleistung
- Pm: Spitzenleistung
- t: Zeit
- t0: Referenzeinschaltdauer
- t1: Kurzeinschaltdauer
- tm: Kurzeinschaltdauer
- ts: Senkzeit
- v: Senkgeschwindigkeit
- vmax: Grenzwert für die Senkgeschwindigkeit

## Patentansprüche

1. Hubwerk (1a) zum Heben und Senken einer Last (L), mit einem Motor (2), der als Drehstromasynchronmotor ausgebildet ist und über den das Hubwerk (1a) zum Heben und Senken der Last (L) antreibbar ist, und mit einem Bremswiderstand (6), über den eine Leistung (P), die aus einem beim Senken der Last (L) mit einer Senkgeschwindigkeit (v) erfolgenden generatorischen Betrieb des Motors (2) resultiert, in Wärme umwandelbar ist, **dadurch gekennzeichnet, dass** der Bremswiderstand (6) für eine Nennleistung (P0) ausgelegt ist, die kleiner als die bei Nennlast und Nennsenkgeschwindigkeit resultierende Leistung (Pmax) ist.

2. Hubwerk (1a) nach Anspruch 1, **dadurch gekennzeichnet, dass** der Motor (2) über eine Steuerung (7) ansteuerbar ist und in der Steuerung (7) unter Berücksichtigung mindestens eines Belastbarkeitskennwerts (P0/t0, P1/t1, Pm/tm) des Bremswiderstands (6) für die Senkgeschwindigkeit (v) ein Grenzwert (vmax) so einstellbar ist, dass beim Senken der Last (L) mit der Senkgeschwindigkeit (v), die dem Grenzwert (vmax) entspricht, die resultierende Leistung (P) auf den mindestens einen Belastbarkeitskennwert (P0/t0, P1/t1, Pm/tm) begrenzt ist.

3. Hubwerk (1a) nach Anspruch 2, **dadurch gekennzeichnet, dass** der Grenzwert (vmax) unter Berücksichtigung der Lastmasse (m) der von dem Hubwerk (1a) aufgenommenen Last (L) und/oder des Hubwegs (h) der von dem Hubwerk (1a) aufgenommenen Last (L) oder der resultierenden Leistung (P) einstellbar ist.

4. Hubwerk (1a) nach Anspruch 2 oder 3, **dadurch gekennzeichnet, dass** der Grenzwert (vmax) für die Senkgeschwindigkeit (v) über die Steuerung (7) so einstellbar und insbesondere maximierbar ist, dass der Bremswiderstand (6) höchstens im Rahmen des mindestens einen Belastbarkeitskennwerts (P0/t0, P1/t1, Pm/tm) betrieben werden kann.

5. Hubwerk (1a) nach Anspruch 3 oder 4, **dadurch gekennzeichnet, dass** ein Lastsensor (8) vorgesehen ist, um einen Wert der Lastmasse (m) zu ermitteln und der Steuerung (7) zur Verfügung zu stellen und/oder ein Hubwegsensor (9) vorgesehen ist, um einen Wert des Hubwegs (h) zu ermitteln und der Steuerung (7) zur Verfügung zu stellen oder ein Leistungssensor vorgesehen ist, um einen Wert der resultierenden Leistung (P) zu ermitteln und der Steuerung (7) zur Verfügung zu stellen.

6. Verfahren zum Betreiben eines Hubwerks (1a) zum Heben und Senken einer Last (L), mit einem Motor (2), der als Drehstromasynchronmotor ausgebildet ist und über den das Hubwerk (1a) zum Heben und Senken der Last (L) antreibbar ist, und mit einem Bremswiderstand (6), über den eine Leistung (P), die aus einem beim Senken der Last (L) mit einer Senkgeschwindigkeit (v) erfolgenden generatorischen Betrieb des Motors (2) resultiert, in Wärme umwandelbar ist, **dadurch gekennzeichnet, dass** beim Senken der Last (L) unter Berücksichtigung mindestens eines Belastbarkeitskennwerts (P0/t0, P1/t1, Pm/tm) des Bremswiderstands (6) für die Senkgeschwindigkeit (v) ein Grenzwert (vmax) so eingestellt wird, dass beim Senken der Last (L) mit der Senkgeschwindigkeit (v), die dem Grenzwert (vmax) entspricht, die resultierende Leistung (P) auf den mindestens einen Belastbarkeitskennwert (P0/t0, P1/t1, Pm/tm) begrenzt ist
und der Bremswiderstand (6) für eine Nennleistung (P0) ausgelegt ist, die kleiner als die bei Nennlast und Nennsenkgeschwindigkeit resultierende Leistung (Pmax) ist.

7. Verfahren nach Anspruch 6, **dadurch gekennzeichnet, dass** der Grenzwert (vmax) in einer Steuerung (7) des Hubwerks (1a). über die der Motor (2) ansteuerbar ist, unter Berücksichtigung der Lastmasse (m) der von dem Hubwerk (1a) aufgenommenen Last (L) und/oder des Hubwegs (h) der von dem Hubwerk (1a) aufgenommenen Last (L) oder der resultierenden Leistung (P) eingestellt wird.

8. Verfahren nach Anspruch 6 oder 7, **dadurch gekennzeichnet, dass** der Grenzwert (vmax) für die Senkgeschwindigkeit (v) so eingestellt und insbesondere maximiert wird, dass der Bremswiderstand (6) höchstens im Rahmen des mindestens einen Belastbarkeitskennwerts (P0/t0, P1/t1, Pm/tm) betrieben werden kann.

9. Verfahren nach Anspruch 7 oder 8, **dadurch gekennzeichnet, dass** ein Wert der Lastmasse (m) über einen Lastsensor (8) ermittelt und der Steuerung (7) zur Verfügung gestellt wird und/oder ein Wert des Hubwegs (h) über einen Hubwegsensor (9) ermittelt und der Steuerung (7) zur Verfügung gestellt wird oder ein Wert der resultierenden Leistung (P) über einen Leistungssensor ermittelt und der Steuerung (7) zur Verfügung gestellt wird.

## Claims

1. Lifting mechanism (1a) for lifting and lowering a load (L), comprising a motor (2) which is designed as a three-phase asynchronous motor and by means of which the lifting mechanism (1a) can be driven in order to lift and lower the load (L), and comprising a brake resistor (6), by means of which power (P) resulting from regenerative operation of the motor (2) taking place during lowering of the load (L) at a lowering speed (v) can be converted into heat, **characterised in that** the brake resistor (6) is designed for a nominal power (P0) which is less than the power (Pmax) resulting with a nominal load and nominal lowering speed.

2. Lifting mechanism (1a) as claimed in claim 1, **characterised in that** the motor (2) can be activated via a controller (7) and in the controller (7), taking into consideration at least one load capacity characteristic value (P0/t0, P1/t1, Pm/tm) of the brake resistor (6) for the lowering speed (v), a threshold value (vmax) can be set such that during lowering of the load (L) at the lowering speed (v), which corresponds to the threshold value (vmax), the resulting power (P) is limited to the at least one load capacity characteristic value (P0/t0, P1/t1, Pm/tm).

3. Lifting mechanism (1a) as claimed in claim 2, **characterised in that** the threshold value (vmax) can be set taking into consideration the load mass (m) of the load (L) picked up by the lifting mechanism (1a) and/or the lifting path (h) of the load (L) picked up by the lifting mechanism (1a) or the resulting power (P).

4. Lifting mechanism (1a) as claimed in claim 2 or 3, **characterised in that** the threshold value (vmax) for the lowering speed (v) can be set and in particular maximised via the controller (7) such that the brake resistor (6) can be operated at most within the scope of the at least one load capacity characteristic value (P0/t0, P1/t1, Pm/tm).

5. Lifting mechanism (1a) as claimed in claim 3 or 4, **characterised in that** a load sensor (8) is provided in order to determine a value of the load mass (m) and to provide it to the controller (7) and/or a lifting path sensor (9) is provided in order to determine a value of the lifting path (h) and to provide it to the controller (7), or a power sensor is provided in order to determine a value of the resulting power (P) and to provide it to the controller (7).

6. Method for operating a lifting mechanism (1a) for lifting and lowering a load (L), comprising a motor (2) which is designed as a three-phase asynchronous motor and by means of which the lifting mechanism (1a) can be driven in order to lift and lower the load (L), and comprising a brake resistor (6), by means of which power (P) resulting from regenerative operation of the motor (2) taking place during lowering of the load (L) at a lowering speed (v) can be converted into heat, **characterised in that**, during lowering of the load (L) taking into consideration at least one load capacity characteristic value (P0/t0, P1/t1, Pm/tm) of the brake resistor (6) for the lowering speed (v), a threshold value (vmax) is set such that during lowering of the load (L) at the lowering speed (v), which corresponds to the threshold value (vmax), the resulting power (P) is limited to the at least one load capacity characteristic value (P0/t0, P1/t1, Pm/tm) and the brake resistor (6) is designed for a nominal power (P0) which is less than the power (Pmax) resulting with a nominal load and nominal lowering speed.

7. Method as claimed in claim 6, **characterised in that** the threshold value (vmax) is set in a controller (7) of the lifting mechanism (1a), via which the motor (7) can be activated, taking into consideration the load mass (m) of the load (L) picked up by the lifting mechanism (1a) and/or the lifting path (h) of the load (L) picked up by the lifting mechanism (1a) or the resulting power (P).

8. Method as claimed in any one of claims 6 or 7, **characterised in that** the threshold value (vmax) for the lowering speed (v) is set and in particular maximised such that the brake resistor (6) can be operated at most within the scope of the at least one load capacity characteristic value (P0/t0, P1/t1, Pm/tm).

9. Method as claimed in claim 7 or 8, **characterised in that** a value of the load mass (m) is determined via a load sensor (8) and is provided to the controller (7) and/or a value of the lifting path (h) is determined via a lifting path sensor (9) and provided to the controller (7) or a value of the resulting power (P) is determined via a power sensor and provided to the controller (7).

## Revendications

1. Engin de levage (1a) destiné à soulever et abaisser une charge (L), ledit engin de levage comprenant un moteur (2) conçu comme un moteur asynchrone triphasé et permettant d'entraîner l'engin de levage (1a) afin de soulever et abaisser la charge (L), et une résistance de freinage (6) permettant de convertir en chaleur une puissance (P) qui résulte d'un fonctionnement en mode générateur du moteur (2) lors de l'abaissement de la charge (L) à une vitesse d'abaissement (v), **caractérisé en ce que** la résistance de freinage (6) est conçue pour une puissance nominale (P0) qui est inférieure à la puissance (Pmax) résultante lors d'une charge nominale et d'une vitesse d'abaissement nominale.

2. Engin de levage (1a) selon la revendication 1, **caractérisé en ce que** le moteur (2) peut être commandé par une commande (7) et une valeur limite (vmax) peut être réglée dans la commande (7) avec prise en compte d'au moins un paramètre de capacité de charge (P0/t0, P1/t1, Pm/tm) de la résistance de freinage (6) pour la vitesse d'abaissement (v) de sorte que, lorsque la charge (L) est abaissée à la vitesse d'abaissement (v) qui correspond à la valeur limite (vmax), la puissance résultante (P) est limitée à l'au moins un paramètre de capacité de charge (P0/t0, P1/t1, Pm/tm).

3. Engin de levage (1a) selon la revendication 2, **caractérisé en ce que** la valeur limite (vmax) peut être réglée avec prise en compte de la masse (m) de la charge (L) reçue par l'engin de levage (1a) et/ou de la course (h) de la charge (L) reçue par l'engin de levage (1a) ou de la puissance résultante (P).

4. Engin de levage (1a) selon la revendication 2 ou 3, **caractérisé en ce que** la valeur limite (vmax) pour la vitesse d'abaissement (v) peut être réglée par la commande (7) et notamment être maximisée de façon à pouvoir utiliser la résistance de freinage (6) au plus dans le cadre de l'au moins un paramètre de capacité de charge (P0/t0, P1/t1, Pm/tm).

5. Engin de levage (1a) selon la revendication 3 ou 4, **caractérisé en ce qu'**un capteur de charge (8) est prévu pour déterminer une valeur de la masse de charge (m) et pour la délivrer à la commande (7) et/ou un capteur de course (9) est prévu pour déterminer une valeur de la course (h) et la délivrer à la commande (7) ou un capteur de puissance est prévu pour déterminer une valeur de la puissance résultante (P) et la délivrer à la commande (7).

6. Procédé de fonctionnement d'un engin de levage (1a) destiné à soulever et abaisser une charge (L), ledit engin de levage comprenant un moteur (2) conçu comme un moteur asynchrone triphasé et permettant d'entraîner l'engin de levage (1a) pour soulever et abaisser la charge (L) et une résistance de freinage (6) permettant de convertir en chaleur une puissance (P) résultant d'un fonctionnement en mode générateur du moteur (2) lorsque la charge (L) est abaissée à une vitesse d'abaissement (v), **caractérisé en ce que** lors de l'abaissement de la charge (L) une valeur limite (vmax) peut être réglée pour la vitesse d'abaissement (v) avec prise en compte d'au moins un paramètre de capacité de charge (P0/t0, P1/t1, Pm/tm) de la résistance de freinage (6) de telle sorte que, lorsque la charge (L) est abaissée à la vitesse d'abaissement (v) qui correspond à la valeur limite (vmax), la puissance résultante (P) soit limitée à au moins un paramètre de capacité de charge (P0/t0, P1/t1, Pm/tm) et **en ce que** la résistance de freinage (6) est conçue pour une puissance nominale (P0) qui est inférieure à la puissance (Pmax) résultant lors d'une charge nominale et d'une vitesse d'abaissement nominale.

7. Procédé selon la revendication 6, **caractérisé en ce que** la valeur limite (vmax) est réglée dans une commande (7) de l'engin de levage (1a), permettant de commander le moteur (2), avec prise en compte de la masse (m) de la charge (L) reçue par l'engin de levage (1a) et/ou de la course (h) de la charge (L) reçue par l'engin de levage (1a) ou de la puissance résultante (P).

8. Procédé selon la revendication 6 ou 7, **caractérisé en ce que** la valeur limite (vmax) de la vitesse d'abaissement (v) est réglée et notamment maximisée de façon à pouvoir utiliser la résistance de freinage (6) au plus dans le cadre de l'au moins un paramètre de capacité de charge (P0/t0, P1/t1, Pm/tm).

9. Procédé selon la revendication 7 ou 8, **caractérisé en ce qu'**une valeur de la masse de charge (m) est déterminée par un capteur de charge (8) et est délivrée à la commande (7) et/ou une valeur de la course (h) est déterminée par un capteur de course (9) et est délivrée à la commande (7) ou une valeur de la puissance résultante (P) est déterminée par un capteur de puissance et est délivrée à la commande (7).
